(19)

Europäisches
Patentamt
European
Patent Office
Office européen
des brevets

(11) **EP 2 345 754 A1**

(12) **EUROPEAN PATENT APPLICATION**
published in accordance with Art. 153(4) EPC

(43) Date of publication:
 **20.07.2011 Bulletin 2011/29**

(51) Int Cl.:
 **D01F 8/12** (2006.01)  **A41B 11/00** (2006.01)

(21) Application number: **09817764.5**

(22) Date of filing: **29.09.2009**

(86) International application number:
 **PCT/JP2009/066931**

(87) International publication number:
 **WO 2010/038732 (08.04.2010 Gazette 2010/14)**

(84) Designated Contracting States:
 **AT BE BG CH CY CZ DE DK EE ES FI FR GB GR HR HU IE IS IT LI LT LU LV MC MK MT NL NO PL PT RO SE SI SK SM TR**
 Designated Extension States:
 **AL BA RS**

(30) Priority: **30.09.2008 JP 2008252284**

(71) Applicant: **KB Seiren, Ltd.**
 **Sabae-shi**
 **Fukui 916-0038 (JP)**

(72) Inventors:
 • **UEDA Masashi**
  **Sabae-shi**
  **Fukui 916-0038 (JP)**
 • **MANABE Hiroyuki**
  **Sabae-shi**
  **Fukui 916-0038 (JP)**

(74) Representative: **Behnisch, Werner**
 **Reinhard, Skuhra, Weise & Partner GbR**
 **Patent- und Rechtsanwälte**
 **Friedrichstrasse 31**
 **80801 München (DE)**

(54) **COMPOSITE FIBER FOR STOCKINGS**

(57)  A composite fiber for stockings which has water-absorbing properties, hygroscopicity, antistatic properties, crimp properties, and cool touch is obtained without sacrificing productivity, transparency, and soft touch. The composite fiber for stockings is an eccentric composite fiber comprising a fiber-forming resin (B) and a polyether block amide copolymer (A). The fiber is **characterized in that** the polyether block amide copolymer (A), in a cross section of the fiber, is exposed in the surface at an angle of 5-90 , and the fiber has 1-10 filaments and a fineness of 1-55 dtex. The fiber especially preferably has a percentage crimp of 10% or higher.

[Fig. 1]

EP 2 345 754 A1

**EP 2 345 754 A1**

**Description**

TECHNICAL FIELD

The present invention relates to the conjugate fibers for stockings.

BACKGROUND ART

Conventional stockings are made of covered elastic yarn as knitting yarn. The covered elastic yarn is composed of an elastic core yarn and polyamide (typically such as nylon 6 or nylon 66) -based filaments as a covering yarn wound around the core yarn.
However, the polyamide-based filaments have low hygroscopicity as compared with natural fibers and therefore, when the polyamide-based filaments are used in stockings which are worn in touch with skin, they can cause the wearer stuffy or sticky feel due to perspiration.
The polyamide-based filaments also have high charging ability and therefore, when the polyamide-based filaments are used in the stockings, a skirt tends to cling to the stockings, which causes serious comfort issues. A general sweat absorption processing includes adding an organic polymer compound containing hydrophilic groups during dyeing or a post treatment after the dyeing. However, this method provides reduces washing durability and is not enough solution.
As a method for imparting certain functionality to a covered yarn itself, it is well known in the prior art to provide the covered yarn with water absorbing property by using filaments of a peculiar cross-section as a covering yarn (Patent Document 1).
On the other hand, as a method for production of transparent and soft stockings, it is well known in the prior art to use conjugate fibers. For example, there is provided a method for producing hygroscopic, transparent and soft stockings by using sheath-core conjugate fibers partially composed of a hygroscopic component such as polyether ester amide (Patent Document 2).

PRIOR ART DOCUMENTS

Patent Documents

    Patent Document 1: Japanese Patent Publication No. 2683646
    Patent Document 2: Japanese Laid-Open Patent Publication No. H09-41204

SUMMARY OF THE INVENTION

Problems to be Solved by the Invention

However, covering-type panty stockings such as that disclosed in Patent Document 1 are inferior in transparency and texture, even though they are ladies' panty stockings which are required to be highly fashionable and functional. Methods for production of stockings using conjugate fibers such as that disclosed in Patent Document 2 require wooly processing because the conjugate fibers are not crimpy, which causes a problem of productivity.
Therefore, an object of the present invention is to provide conjugate fibers for stockings, having water-absorbing property, hygroscopicity, antistatic property, crimping property, and cool feeling without sacrificing productivity, transparency and texture.

Means for Solving the Problems

The object is achieved by a conjugate fiber for stockings, comprising an eccentric conjugate fiber made from a fiber-forming resin and a polyether block amide copolymer, wherein the polyether block amide copolymer is exposed on the surface of the conjugate fiber at an angle of 5 to 90° in a cross-section of the conjugate fiber, the number of filaments is 1 to 10 in the conjugate fiber, and total fineness is 1 to 55 dtex.

Effects of the Invention

According to the present invention, it is possible to provide conjugate fibers for stockings, having high transparency and soft texture due to high crimping property, high productivity because of no need for wooly processing, and superior water-absorbing property, hygroscopicity, antistatic property, and cool feeling.

BRIEF DESCRIPTION OF DRAWINGS

Fig. 1 is a schematic diagram showing a cross-section of a conjugate fiber for stockings according to an embodiment of the present invention;
Fig. 2 is a schematic diagram showing a cross-section of a conjugate fiber for stockings according to an embodiment of the invention; and

Fig. 3 is a schematic diagram showing a cross-section of a conjugate fiber for stockings according to an embodiment of the invention.

EMBODIMENTS FOR CARRYING OUT THE INVENTION

A conjugate fiber for stockings according to the present invention is composed of an eccentric composite fiber which is made from a fiber-forming resin and a polyether block amide copolymer.
The fiber-forming resin may be any meltable fiber-forming resin, examples of which include polyamides such as nylon 6 and nylon 66; polyesters such as polyethylene terephthalate, polybutylene terephthalate, polyethylene naphthalate, fully aromatic polyester, and polylactic acid; polyolefins such as polyethylene and polypropylene; polymers composed mainly of any of them; and thermoplastic polymers such as polyphenylene sulfide and polyether ketone. In particular, polyamide (particularly, nylon 6) is preferably used, because it has high strength and provides durability even when it forms thin materials.
The polyether block amide copolymer may be, for example, a copolymer produced by copolycondensation of a polyamide unit having a reactive terminal group and a polyether unit having a reactive terminal group, such as (1) a diamine-terminated polyamide unit and a dicarboxyl-terminated polyoxyalkylene unit; (2) a dicarboxyl-terminated polyamide unit and polyether diol; or (3) a dicarboxyl-terminated polyamide unit and a diamine-terminated polyoxyalkylene unit (which can be produced by cyanoethylation and hydrogenation of a polyoxyalkylene unit having two hydroxyl groups in $\alpha$- and $\omega$-positions). In the present invention, the polyether block amide copolymer is preferably a copolymer produced by copolycondensation of the materials (2), which is represented by the following general formula,

$$HO\text{-}(CO\text{-}PA\text{-}CO\text{-}O\text{-}PE\text{-}O)_n\text{-}H,$$

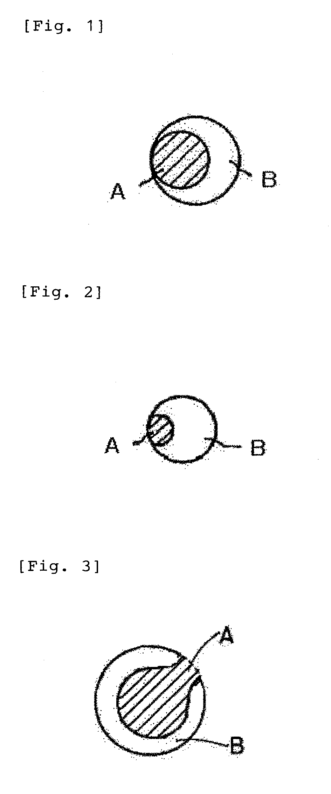

wherein PA represents a polyamide block (hard segment), PE represents a polyether block (soft segment), and n represents the number of the repeating units.
The polyamide unit is preferably nylon 6, nylon 66, nylon 12, or the like, and the polyether unit is preferably polyethylene glycol, polytetramethylene glycol, or the like.
The ratio by weight between the "polyamide unit" and the "polyether unit" is preferably from 99:1 to 5:95, more preferably from 80:20 to 10:90, and the copolymer whose ratio by weight is within such range is effectively used.
As such copolymer, Pebax (registered trademark) series (manufactured by Arkema) are available in the market, and particularly, high antistatic property can be achieved by Pebax MV1074 or Pebax MH1657.
A cross-sectional shape of the conjugate fiber according to the present invention will be explained in the following.
The eccentric conjugate fiber of the present invention is composed of a fiber made from a combination of the two resins, that is, a fiber-forming resin and a polyether block amide copolymer, in which the centers of gravity of the fiber-forming resin and the polyether block amide copolymer are out of alignment in the cross-section of the fiber.
Some examples of the cross-sectional shape of the fiber are shown in Figs. 1 to 3. In Figs. 1 to 3, a character A represents the polyether block amide copolymer, and a character B represents the fiber-forming resin.
The conjugate fibers shown in Figs. 1 and 2 are of an eccentric sheath-core type. In the conjugate fiber shown in Fig. 3, the outer fiber-forming resin B is C-shaped.
For use in stockings, the conjugate fiber is preferably of an eccentric sheath-core type as shown in Figs. 1 and 2 so as to increase the percentage crimp.
The fiber may also have two or more sections of polyether block amide copolymer A. In such a case, the fiber should be eccentric as a whole.
As used herein, the term "angle of exposure" means the angle between two straight lines drawn from the center of the fiber to two points on the periphery of a fiber in a cross-section of the fiber, the points corresponding to both ends of an area of a pertinent section which is exposed on the surface of the fiber. When two or more sections are exposed on the surface of the fiber, the angle of exposure is the sum of the angles of exposure of these sections.

With respect to the polyether block amide copolymer, an angle of exposure is required to fall within the range of 5 to 90°, preferably 5 to 80°. When the angle of exposure is within this range, the conjugate fiber is excellent in water-absorbing properties, hygroscopicity, antistatic property, and cool feeling, and the conjugate fiber has high productivity and good dyeability.

The size (total fineness) of the conjugate fiber of the present invention falls within the range of 1 to 55 dtex, preferably 5 to 30 dtex. If the total fineness of the fiber is less than 1 dtex, the fiber may have practically insufficient durability, and on the other hand, if the total fineness is more than 55 dtex, the fiber may tend to have insufficient transparency or rough and hard texture.

The conjugate fiber of the present invention is composed of 1 to 10 filaments. Preferably, the fiber is composed of 2 to 7 filaments, so that it can have high transparency, good texture, soft touch, and high durability.

According to the present invention, the fiber preferably has a percentage crimp of 10% or higher. The percentage crimp is more preferably 40% or higher, particularly preferably 50% or higher. When the percentage crimp is 10% or higher, the conjugate fiber can have not only high transparency, good texture and soft touch but also superior cool feeling. Since the conjugate fiber of the invention is crimpy, it can be used as it is producing stockings without any further processing such as wooly processing, which increases the productivity.

From the viewpoint of the productivity of spinning and the workability of dyeing and the like, an area ratio (cross-sectional area ratio) of the fiber-forming resin to the polyether block amide copolymer is preferably 90/10 or less. From the viewpoint of antistatic property and cool feeling, the area ratio of the fiber-forming resin to the polyether block amide copolymer is preferably 10/90 or more, particularly preferably 20/80 or more.

The conjugate fiber of the present invention can be produced using a conventional spinning machine for conjugate fiber. The fiber may be produced by a conventional method in which a spinning process is performed at a speed of about 500 to about 1,500 m/minute and then a drawing and heat treating process is performed, or by a high-speed spinning method such as a spin-draw method.

The fiber-forming resin may contain a small amount of any other polymer, an antioxidant, a pigment, a delustering agent, an anti-microbial agent, inert fine particles, or any other additive.

The conjugate fiber of the present invention is suitable for using as a knitting yarn of stockings. Stockings include panty stockings, short stockings (below the knee), long stockings (up to the thighs), and other various stockings. Stockings may be produced using only the conjugate fibers of the present invention or using the conjugate fibers of the invention and any other fibers. Yarn composed of a mixture of the conjugate fibers of the present invention and natural fibers may also be used. In these cases, the stockings include 20 to 100% by weight of the fibers of the present invention, preferably. A basis weight, gauge and the like of the stockings are not limited, but may be appropriately determined for any purpose.

The effective functions of the conjugate fiber can be imparted to the stockings by the use of the conjugate fiber of the present invention.

EXAMPLES

The present invention is more specifically described by the examples below. It will be understood that the examples are not intended to limit the scope of the invention. Each of characteristic values of the examples was determined by the following methods.

<Water-Absorbing Property>

The Byreck method was applied. A 20 cm x 2.5 cm piece of knitted fabric was used as a sample. The height (cm) of water soaked up through the sample by capillary action was measured at the temperature of 20°C during 10 minutes.

<Hygroscopicity>

A 20 cm x 2.5 cm piece of knitted fabric was used as a sample. The sample was placed in a thermo-hygrostat at 25°C and 90%RH, and after 24 hours, the increase in the weight of the sample was measured. The hygroscopicity was expressed as the ratio (%) of the increase in the weight to the initial weight.

<Antistatic Property (Friction Electrification Voltage)>

The friction electrification voltage was measured by the frictional electrification voltage measurement method according to JIS L 1094 (1997).

Measurement of friction electrification voltage: electrostatic tester
Friction cloth: wool, cotton
Rubbing direction: transverse
Washing process: performed (three times)
Temperature and humidity: 20°C and 33%RH

<Cool Feeling (q-max)>

A BT-Box (10 g/cm$^2$ in pressure) kept at a temperature of 33°C was placed on humidity controlled three-fold stockings (6 layers) in a room at a temperature of 23°C and a humidity of 55%RH, and the heat flux per unit area was measured under a temperature difference of 10°C using a Thermolabo II manufactured by KATO TECH CO., LTD. In this measurement method, q-max is preferably 0.110 (J/cm$^2$·sec) or more.

<Angle of Exposure>

After the conjugate fiber was dyed, the fiber was sliced by a microtome and a photograph of the cross-section of the fiber was taken using a stereoscopic microscope. On the photograph, two straight lines were drawn from the center point of the fiber to two points on the periphery of the fiber, the points corresponding to both ends of an area of a pertinent section which is exposed on the surface of the fiber, and then the angle between those two straight lines was measured using a protractor.

<Percentage Crimp>

The percentage crimp is defined as a value calculated from the following formula.
$$\text{Percentage crimp = (L0-L1)x100/L0}$$

A tension loading of 200 g was applied to a sample (conjugate fiber), and after a lapse of 1 minute, the length (L0) thereof was measured.
Next, the tension loading was removed from the sample, and the sample was hung with a load of 1 g, after that, the sample was immersed in hot water at 100°C for 10 minutes and air-dried for 16 hours while the 1 g load was applied to the sample.
The length (L1) of the air-dried sample was measured, while the 1 g load was applied to the sample.

Example 1

a polyether block amide copolymer (Pebax MV1074 manufactured by Arkema) and nylon 6 (manufactured by Mitsubishi Chemical Corporation) which were melted separately were spun into a conjugate fiber (an angle of exposure was 33.5°) at an area ratio of the copolymer to nylon 6 of 50/50, the conjugate fiber having the cross-section shown in Fig. 1, and then the undrawn yarn having the single filament fineness of 35 dtex was taken up.
The undrawn yarn was drawn at room temperature under the condition of a draw speed of 800 m/minute and a draw ratio of 3.28 times. The drawn yarn was wound into a pirn at a winding hardness in the range of 80 to 75, thereby a 22 dtex/2f conjugate fiber for stockings was obtained.
No crimp was observed in the appearance of a cop of the conjugate fiber, but when 1 to 2 minutes had passed since the fiber was released from the cop, spiral crimps were observed. The percentage crimp was 62%.
The conjugate fiber was knitted into stockings using a 4-feeder seamless stocking knitting machine under the condition of a number of revolutions of 900 rpm. As a result, the conjugate fiber according to the invention was successfully knitted with no problem.
Subsequently, the stockings were dyed at 95°C and finished by form setting with steam at 110°C.
The obtained stockings were well dyed and excellent in transparency and touch.
The conjugate fiber according to the present invention could be used for knitting stockings without any crimp processing because of its crimp characteristic, thereby high productivity was achieved.

Example 2

Stockings were prepared in the same manner as in Example 1, except that the total fineness/the number of filaments was changed to 19 dtex/2f.

The obtained conjugate fiber had a percentage crimp of 52%.

The obtained stockings were well dyed and excellent in transparency and touch. The conjugate fiber according to the present invention could be used for knitting stockings without any crimp processing because of its crimp characteristic, thereby high productivity was achieved.

Comparative Example 1

A thermoplastic polyurethane elastomer (manufactured by Dainichiseika Color & Chemicals Mtg. Co., Ltd.) and nylon 6 (manufactured by Mitsubishi Chemical Corporation) which were melted separately were spun into a conjugate fiber (an angle of exposure was 20°) at an area ratio of the elastomer to nylon 6 of 50/50, the conjugate fiber having the eccentric polycaproamide sheath-polyurethane core cross-section shown in Fig. 1 and then the undrawn yarn having the single filament fineness of 31 dtex was taken up.

The undrawn yarn was drawn at room temperature under the conditions of a draw speed of 600 m/minute and a draw ratio of 3.50 times. The drawn yarn was wound into a pirn at a winding hardness in the range of 80 to 75, thereby a 19 dtex/2f conjugate fiber for stockings was obtained. The obtained conjugate fiber had a percentage crimp of 48%.

The conjugate fiber was used in knitting under the same conditions as those in Example 1. Subsequently, according to conventional methods, the stockings were dyed at 95°C and finished by form setting with steam at 110°C.

Comparative Example 2

Stockings were prepared in the same manner as in Example 1, except that an eccentric sheath-core conjugate fiber (an angle of exposure was 0°) in which the polyether block amide copolymer was not exposed to the surface of the fiber was produced.

The stockings obtained in Examples 1 and 2 and Comparative Example 2 were compared with each other with respect to water-absorbing property. The results are shown in Table 1.

[Table 1]

|  | Water-absorbing Property (cm) |
|---|---|
| Example 1 | 0.1 |
| Example 2 | 0.1 |
| Comparative Example 2 | 0 |

The stockings obtained in Examples 1 and 2 and Comparative Examples 1 and 2 were compared with each other with respect to hygroscopicity. The results are shown in Table 2.

[Table 2]

|  | Hygroscopicity (%) |
|---|---|
| Example 1 | 16.9 |
| Example 2 | 21.1 |
| Comparative Example 1 | 4.0 |
| Comparative Example 2 | 13.0 |

The stockings obtained in Examples 1 and 2 and Comparative Examples 1 and 2 were compared with each other with respect to frictional electrification voltage. The results are shown in Table 3.

[Table 3]

| | Friction cloth | Immediately after rubbing | After 10 seconds | After 30 seconds | After 60 seconds | Half life |
|---|---|---|---|---|---|---|
| | | (v) | (v) | (v) | (v) | (v) |
| Example 1 | Wool | -1450 | -140 | -120 | -100 | 0.4 |
| | Cotton | -3240 | -210 | -160 | -130 | 0.4 |
| Example 2 | Wool | -3040 | -210 | -160 | -140 | 0.3 |
| | Cotton | -3860 | -230 | -170 | -130 | 0.3 |
| Comparative Example 1 | Wool | -8780 | -8620 | -8320 | -8220 | 60 seconds or more |
| | Cotton | -11120 | -10780 | -10620 | -10480 | 60 seconds or more |
| Comparative Example 2 | Wool | -10480 | -10600 | -300 | -200 | 2.5 |
| | Cotton | -9840 | -700 | -220 | -160 | 2.2 |

The stockings obtained in Examples 1 and 2 and Comparative Example 2 were compared with each other with respect to cool feeling. The results are shown in Table 4.

[Table 4]

| | $q$-max (W/cm$^2$) |
|---|---|
| Example 1 | 0.146 |
| Example 2 | 0.134 |
| Comparative Example 2 | 0.084 |

INDUSTRIAL APPLICABILITY

The conjugate fiber of the present invention is suitable for using in stockings.

DESCRIPTION OF REFERENCE CHARACTERS

A polyether block amide copolymer.
B fiber-forming resin.

**Claims**

1.  A conjugate fiber for stockings, comprising an eccentric conjugate fiber made from a fiber-forming resin and a polyether block amide copolymer, wherein the polyether block amide copolymer is exposed on the surface of the fiber at an angle of 5 to 90° in a cross-section of the conjugate fiber, the number of filaments is 1 to 10 in the conjugate fiber, and total fineness is 1 to 55 dtex.

2.  The conjugate fiber for stockings according to claim 1, having a percentage crimp of 10% or higher.

3.  The conjugate fiber for stockings according to claim 1, having a percentage crimp of 40% or higher.

4.  The conjugate fiber for stockings according to claim 1, having a percentage crimp of 50% or higher.

**5.** The conjugate fiber for stockings according to claim 1, wherein the fiber-forming resin is polyamide.

[Fig. 1]

[Fig. 2]

[Fig. 3]

| **INTERNATIONAL SEARCH REPORT** | International application No. |
|---|---|
| | PCT/JP2009/066931 |

**A. CLASSIFICATION OF SUBJECT MATTER**
*D01F8/12*(2006.01)i, *A41B11/00*(2006.01)i

According to International Patent Classification (IPC) or to both national classification and IPC

**B. FIELDS SEARCHED**

Minimum documentation searched (classification system followed by classification symbols)
D01F8/00-8/18

Documentation searched other than minimum documentation to the extent that such documents are included in the fields searched

| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 61-289123 A  (Toray Industries, Inc.), 19 December 1986 (19.12.1986), claims; page 1, lower right column, lines 17 to 20; page 4, lower left column, line 17 to lower right column, line 10 (Family: none) | 1-5 |
| A | JP 44-10488 B1  (Toyo Reyon Kabushiki Kaisha), 15 May 1969 (15.05.1969), example 3; claims; fig. 2 (Family: none) | 1-5 |
| A | JP 47-32125 A  (Kanefuchi Boseki Kabushiki Kaisha), 14 November 1972 (14.11.1972), claims; example 3; fig. 3 (Family: none) | 1-5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 December, 2009 (02.12.09) | 15 December, 2009 (15.12.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
|---|
| PCT/JP2009/066931 |

C (Continuation).   DOCUMENTS CONSIDERED TO BE RELEVANT

| Category* | Citation of document, with indication, where appropriate, of the relevant passages | Relevant to claim No. |
|---|---|---|
| P,X | WO 2008/123586 A1  (KB Seiren, Ltd.),<br>16 October 2008 (16.10.2008),<br>paragraph [0017]; claims<br>(Family: none) | 1,2,5 |

Form PCT/ISA/210 (continuation of second sheet) (April 2007)

**EP 2 345 754 A1**

## REFERENCES CITED IN THE DESCRIPTION

**Patent documents cited in the description**

- JP 2683646 B

- JP H0941204 B